# EUROPEAN PATENT SPECIFICATION

(11) **EP 3 591 779 B1**
(45) Date of publication and mention of the grant of the patent: **30.08.2023**
(21) Application number: 17898692.3
(22) Date of filing: 28.02.2017
(51) Int. Cl.: H02H 3/093, H02H 3/08, H02H 3/04, H02H 3/00, H02H 1/06, H02H 1/04, G06F 1/24

(54) **ELECTRONIC CIRCUIT BREAKER**
ELEKTRONISCHER SCHUTZSCHALTER
DISJONCTEUR ÉLECTRONIQUE

(43) Date of publication of application: 08.01.2020
(73) Proprietor: Mitsubishi Electric Corporation, Chiyoda-ku Tokyo 100-8310 (JP)
(72) Inventor: TAKIGAWA Yusuke, Tokyo 100-8310 (JP); HARADA Kouki, Tokyo 100-8310 (JP); CHIKAI Masataka, Tokyo 102-0073 (JP); NOMURA Toshimitsu, Tokyo 100-8310 (JP)
(74) Representative: Diehl & Partner
(86) International application number: PCT/JP2017/007623
(87) International publication number: WO 2018/158793

(56) References cited:
- EP-A2- 0 191 402
- JP-A- S5 553 175
- JP-A- H08 331 748
- JP-A- S62 173 914
- JP-A- 2002 008 510
- US-A- 5 311 392
- US-A1- 2015 270 083

## Description

### Technical Field

The present invention relates to an electronic circuit breaker in which a multiple of microcomputers are mounted.

### Background Art

Fig. 6 is a circuit diagram of an existing breaker disclosed in, for example, JP-A-63-274321 (Patent Document 1).

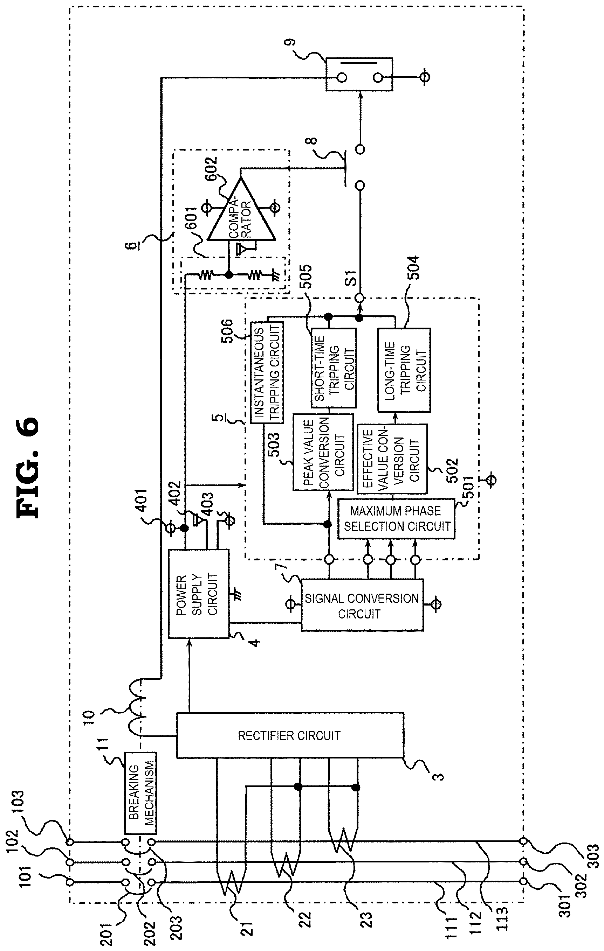

In Fig. 6, reference signs 101, 102, and 103 are power supply side terminals connected to a three-phase power supply, and the power supply side terminals 101, 102, and 103 are connected to corresponding load side terminals 301, 302, and 303 via respective electric paths 111, 112, and 113 and switching contacts 201, 202, and 203. Reference signs 21, 22, and 23 are current transformers that detect load currents flowing in the electric paths 111, 112, and 113 respectively, and a rectifier circuit 3 that changes a secondary output current of each current transformer 21, 22, and 23 in a single direction is connected to secondary sides of the current transformers 21, 22, and 23.

The secondary output currents of the current transformers 21, 22, and 23 obtained from the rectifier circuit 3 are supplied to a power supply circuit 4, generate a positive power supply 401 that drives, for example, a time-limit circuit 5 and an undervoltage operation prohibiting circuit 6, to be described hereafter, and simultaneously generate a reference voltage 402 of the undervoltage operation prohibiting circuit 6 and a negative power supply 403 used in the time-limit circuit 5 and a signal conversion circuit 7. The signal conversion circuit 7 is connected to the power supply circuit 4, and includes a differential amplifier that converts the secondary output current in accordance with the load current output from the secondary side of each current transformer 21, 22, and 23 into a voltage signal that can be input into the time-limit circuit 5.

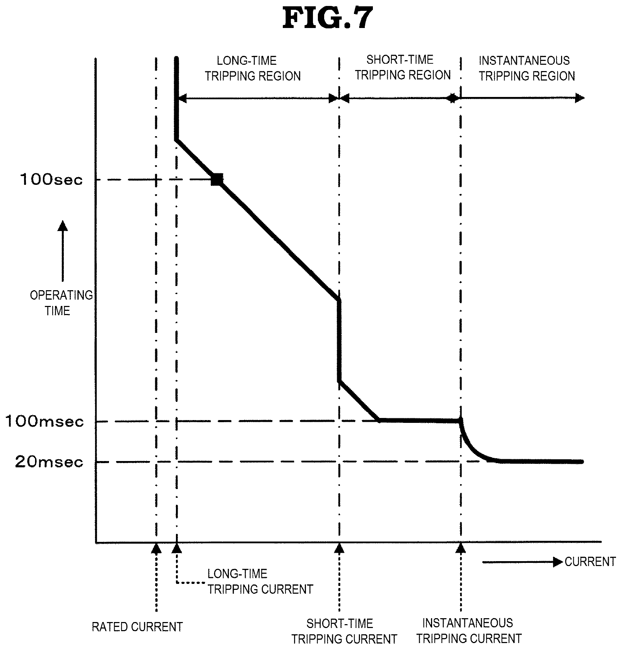

The time-limit circuit 5 starts up owing to the positive power supply 401 being supplied from the power supply circuit 4, simultaneously with which voltage signals in accordance with the load currents flowing in the electric paths 111, 112, and 113 are input into the time-limit circuit 5 from the signal conversion circuit 7. The time-limit circuit 5 includes a maximum phase selection circuit 501, an effective value conversion circuit 502, a peak value conversion circuit 503, a long-time tripping circuit 504, a short-time tripping circuit 505, and an instantaneous tripping circuit 506, and analog signals input into the time-limit circuit 5 are such that an analog signal of the electric path through which the largest current of the load currents flowing in the electric paths 111, 112, and 113 is flowing is selected by the maximum phase selection circuit 501, and input into the effective value conversion circuit 502. A DC output signal of the effective value conversion circuit 502 is input into the long-time tripping circuit 504, and when the kind of long-time tripping current region shown in Fig. 7 is exceeded, a tripping signal S1 acting as the time-limit circuit 5 is output from the long-time tripping circuit 504.

Also, a voltage signal output from the signal conversion circuit 7 is input into the peak value conversion circuit 503, and a maximum voltage of an analog signal is output as a DC signal, and input into the short-time tripping circuit 505. When the DC signal exceeds the kind of short-time tripping current region shown in Fig. 7, the tripping signal S1 acting as the time-limit circuit 5 is output from the short-time tripping circuit 505. An analog signal output from the signal conversion circuit 7 is input directly into the instantaneous tripping circuit 506 without passing through an arithmetic circuit, and when the kind of instantaneous tripping current region shown in Fig. 7 is exceeded by an instantaneous value of the analog signal, the tripping signal S1 acting as the time-limit circuit 5 is output from the instantaneous tripping circuit 506.

The tripping signal S1 output from the time-limit circuit 5 in this way is input into a switching circuit 9. The switching circuit 9 is configured of, for example, a thyristor, and is configured so that the switching circuit 9 is turned on by the tripping signal S1, a release type overcurrent tripping device 10, which is a tripping device, is driven, and the switching contacts 201, 202, and 203, which are in a closed state, mechanically change to an opened state via a breaking mechanism 11.

The undervoltage operation prohibiting circuit 6 is configured of a voltage dividing circuit 601 configured of resistors, and a comparator 602 having hysteresis characteristics. The load currents flow when the switching contacts 201, 202, and 203 are in a closed state, and the secondary output currents of the current transformers 21, 22, and 23 flow into the power supply circuit 4 via the rectifier circuit 3. The undervoltage operation prohibiting circuit 6 is provided with functions of comparing the positive power supply 401 of the power supply circuit 4 divided by the voltage dividing circuit 601 with the reference voltage 402, closing an output switch 8 when the positive power supply 401 becomes greater than a turn-on level, and opening the output switch 8 when the positive power supply 401 becomes smaller than a turn-off level, thereby deactivating a drive of the switching circuit 9 when the power supply is in a state insufficient for a normal operation, and preventing a malfunction of the release type overcurrent tripping device 10.

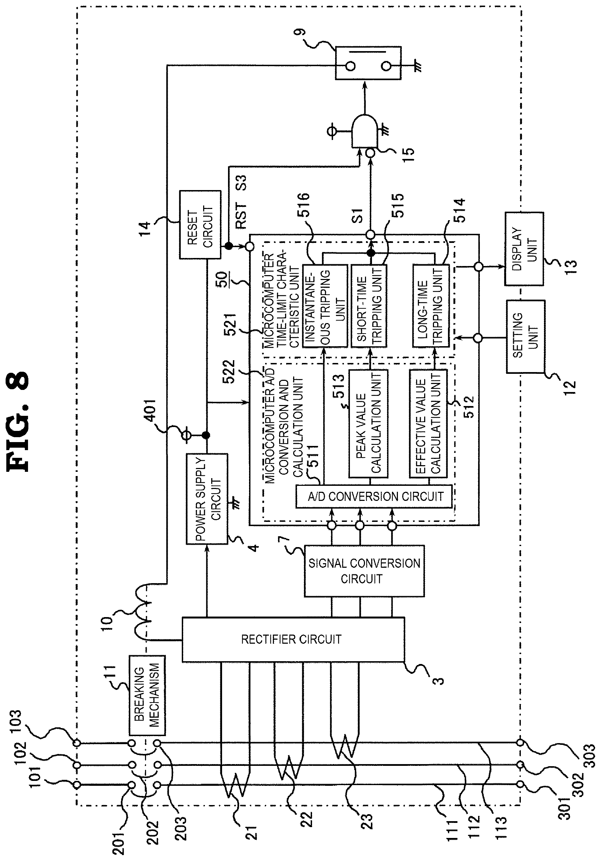

The undervoltage operation prohibiting circuit 6 of the heretofore described circuit breaker is such that the reference voltage 402 is generated from the power supply circuit 4, and whether the positive power supply 401 is of a sufficient voltage value is determined using the comparator 602, but a circuit breaker in which a microcomputer is mounted, disclosed in, for example, JP-A-6-245362 (Patent Document 2), is configured of a microcomputer 50 having a role equivalent to that of the time-limit circuit 5 described in Fig. 6, a reset circuit 14 that carries out reset control of the microcomputer 50 from an exterior, and an AND circuit 15, as shown in Fig. 8. The switching circuit 9 is controlled by a logical product of the tripping signal S1 of the microcomputer 50 acting as a time-limit circuit and a reset signal S3 from the reset circuit 14, whereby the drive of the switching circuit 9 is deactivated, and a malfunction of the release type overcurrent tripping device 10 is prevented in the same way as in Fig. 6, even when the load currents flowing in the electric paths 111, 112, and 113 are small, or when an erroneous tripping signal S1 is output from the microcomputer 50 due to instability of the power supply circuit 4 when the switching contacts 201, 202, and 203 are activated.

In addition, as a configuration of the circuit breaker shown in Fig. 8, reference sign 12 indicates a characteristic setting unit, and the characteristic setting unit 12 has a role of setting a parameter of a time-limit characteristic stored in an internal RAM or the like of the microcomputer 50. The characteristic setting unit 12 is configured of a variable resistor such as a trimmer, and an overcurrent time-limit characteristic desired by a user can be set by a variable voltage signal being input into the microcomputer 50. Also, a display unit 13 includes an advance warning display lamp that warns of a setting value being exceeded in accordance with an output signal from the microcomputer 50 acting as a time-limit circuit, and an exceeded rating display lamp that displays the matter that there is energization in an overcurrent region.

In Fig. 8, a long-time tripping unit 514, a short-time tripping unit 515, and an instantaneous tripping unit 516 correspond to the long-time tripping circuit 504, the short-time tripping circuit 505, and the instantaneous tripping circuit 506 respectively of Fig. 6, and an effective value calculation unit 512 and a peak value calculation unit 513 correspond to the effective value conversion circuit 502 and the peak value conversion circuit 503 respectively of Fig. 6. Also, an A/D conversion circuit 511 converts an analog signal output from the signal conversion circuit 7 into a digital signal, and outputs the digital signal to each of the effective value calculation unit 512, the peak value calculation unit 513, and the instantaneous tripping unit 516.

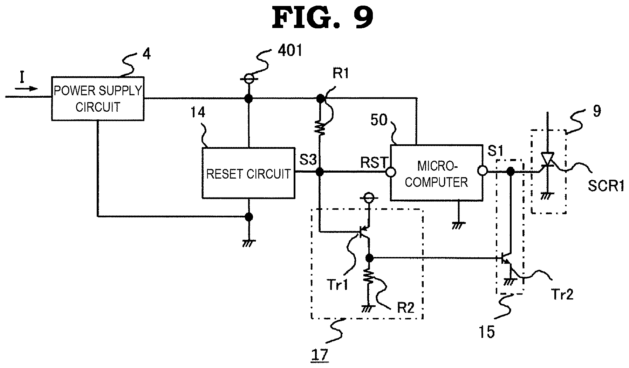

Furthermore, an example of an undervoltage operation prohibiting circuit configured of a reset circuit, a pseudo load current circuit, and an AND circuit is shown in Fig. 9 as an application of the above.

In Fig. 9, the power supply circuit 4 is a circuit that generates the constant positive power supply 401 from a secondary output current I output from a current transformer, and the positive power supply 401 supplies power to the reset circuit 14 and the microcomputer 50. The reset signal S3 of the reset circuit 14 is connected via a resistor R1 to the positive power supply 401, and is configured so as to be of the same potential as the positive power supply 401 when the monitored positive power supply 401 exceeds a predetermined voltage.

When the positive power supply 401 is lower than the predetermined voltage, the reset signal S3 is output at an L level. The reset signal S3 of the reset circuit 14 is input into an RST terminal, which is a reset input terminal of the microcomputer 50, and a transistor Tr1 of a pseudo load current circuit 17, and simultaneously controls resetting of the microcomputer 50 and a current flowing to a resistor R2 connected to a collector of the transistor Tr1. A configuration is such that a base of a transistor Tr2 of the AND circuit 15 is connected to one end of the resistor R2, a collector is connected to a terminal that outputs the tripping signal S1 of the microcomputer 50, voltage is applied between the base and an emitter of the transistor Tr2 when current is flowing in the resistor R2, and current flows from the collector to the emitter when the microcomputer 50 outputs the tripping signal S1 at an H level.

An operation of the heretofore described configuration will be described. When a load current flows in an electric path, a secondary output current of a current transformer is such that a current I flows into the power supply circuit 4 via a rectifier circuit. The positive power supply 401 of the power supply circuit 4 gradually rises owing to the current I flowing in, and when the positive power supply 401 reaches a drive voltage (for example, 0.7V) of the reset circuit 14, the reset signal S3 is output from the reset circuit 14 at the L level, and the microcomputer 50 is maintained in a reset state. At the same time, a difference in potential occurs between a base and an emitter of the transistor Tr1 of the pseudo load current circuit 17, and a collector current flows to the resistor R2. A resistance value of the resistor R2 is regulated so that current consumption is equivalent to current consumption of the whole circuit in a steady state.

The positive power supply 401 rises further, and when the positive power supply 401 reaches a release voltage (for example, 2.8V) of the reset circuit 14, the reset signal S3 is output from the reset circuit 14 at an H level, and the reset state of the microcomputer 50 is ended, simultaneously with which the difference in potential between the base and the emitter of the transistor Tr1 of the pseudo load current circuit 17 disappears, and the collector current becomes zero. As a calculation process is started by the reset state of the microcomputer 50 being ended, the current consumption of the whole circuit increases sharply, but a stable rise of the positive power supply is enabled by a current equivalent to the current consumption of the whole circuit in a steady state being caused to flow in the resistor R2 before ending the reset state.

When the positive power supply 401 is less than the release voltage of the reset circuit 14, current flows to the resistor R2 of the pseudo load current circuit 17, as heretofore described. The base of the transmitter Tr2 in the AND circuit 15 is connected to one end of the resistor R2, and a difference in potential occurs between the base and the emitter of the transistor Tr2 in accordance with a generated voltage. Even when the tripping signal S1 is output at the H level from the microcomputer 50 in this state, the transistor Tr2 drives, and current is drawn from the microcomputer 50, because of which a thyristor SCR1 in the switching circuit 9 does not drive.

In this way, the configuration combines the reset circuit 14 for increasing operational reliability of the microcomputer 50 and the pseudo load current circuit 17 for realizing a stable power supply rise, and as there is no need to newly provide a reference voltage circuit or a comparator, unlike the undervoltage operation prohibiting circuit 6 shown in Fig. 6, the configuration is applied to an electronic circuit breaker in which a microcomputer is mounted.

Document US 5,311,392 A discloses a circuit breaker having two microcomputers 210 and 250. The first microcomputer 210 provides both instantaneous tripping signal and time-limit tripping signal. The second microcomputer 250 provides a backup as "shadow protection" for the first microcomputer to cover situations in which the first microcomputer should trip but does not trip for some reason.

Document US 2015/270083 A1 discloses an electronic circuit breaker having plural microcontrollers. Each microcontroller is assigned to a specific function. The specific functions differ from one another, so that the storage of data concerning an electric power system can be performed in a redundant manner.

### Citation List

### Patent Literature

Patent Document 1: JP-A-63-274321
Patent Document 2: JP-A-6-245362
Patent Document 3: US 5,311,392 A
Patent Document 4: US 2015/270083 A1

### Summary of Invention

### Technical Problem

An existing example of the electronic circuit breaker described thus far, in which an undervoltage operation prohibiting circuit is mounted, is applied to a circuit breaker wherein a time-limit characteristic is provided by a single control unit, for example, a microcomputer, and the microcomputer 50 forming the control unit is broadly divided into two portions, those being an A/D conversion and calculation unit 522, including the A/D conversion circuit 511, and a time-limit characteristic unit 521, as shown in Fig. 8.

The time-limit characteristic unit 521 is such that there is a need for control that differs for each product, such as an overcurrent time-limit characteristic and a setting of the time-limit characteristic, and control of a display unit that is an advance warning display lamp and an exceeded rating display lamp, because of which a processing time increases in accordance with functions possessed by a product, and an increase in processing time is a problem in a circuit breaker wherein a short operation of several tens of milliseconds from the circuit breaker being turned on until the switching contacts 201, 202, and 203 opening, like a circuit breaker instantaneous tripping characteristic, is required.

Raising an operating frequency of the microcomputer 50 is conceivable as a method of reducing processing time, but the current consumption of the microcomputer 50 increases, because of which, owing to the secondary output currents of the current transformers 21, 22, and 23 being used as the positive power supply 401 of the power supply circuit 4, the power supply for driving the circuit including the microcomputer 50 is insufficient with a long-time tripping characteristic wherein the currents flowing in the electric paths 111, 112, and 113 are small. In addition, not only processing time, but also a used amount of capacity of incorporated memories, which are an internal ROM and RAM of the microcomputer 50, increases in accordance with functions.

### Solution to Problem

The invention, having been contrived in order to resolve the above problem, provides an electronic circuit breaker having the features defined in appended independent claim 1. Advantageous embodiments of the invention are defined in the appended dependent claims, description and drawings of the invention. Solution to Problem

An electronic circuit breaker according to the invention is characterized by including a switching contact that opens and closes an electric path, a current detecting device that detects a current in the electric path, a characteristic setting unit that sets an instantaneous tripping characteristic and a time-limit tripping characteristic for opening the switching contact in accordance with a current flowing through the electric path, a first microcomputer into which an output signal of the current detecting device is input, and which outputs an instantaneous tripping signal, a second microcomputer to which the characteristic setting unit is connected, and which transmits the instantaneous tripping characteristic to the first microcomputer, acquires information on a current flowing through the electric path from the first microcomputer, and outputs a time-limit tripping signal, and a tripping device that opens the switching contact based on the instantaneous tripping signal and the time-limit tripping signal.

### Advantageous Effects of Invention

According to the electronic circuit breaker according to the invention, an A/D conversion and calculation unit and a time-limit characteristic unit are shared between a multiple of microcomputers, because of which a processing load of each microcomputer is lightened, and a reduction in processing time and a reduction in a used amount of capacity of internal memory can be achieved.

The foregoing and other objects, features, aspects and advantages of the invention will become more apparent from the following detailed description of the invention when taken in conjunction with the accompanying drawings.

### Brief Description of Drawings

[Fig. 1] Fig. 1 is a block diagram of an electronic circuit breaker according to a first embodiment of the invention.
[Fig. 2] Fig. 2 is a block diagram of an electronic circuit breaker according to a second embodiment of the invention.
[Fig. 3] Fig. 3 is a block diagram of an electronic circuit breaker according to a third embodiment of the invention.
[Fig. 4] Fig. 4 is a block diagram of an electronic circuit breaker according to a fourth embodiment of the invention.
[Fig. 5] Fig. 5 is a block diagram of an electronic circuit breaker according to a fifth embodiment of the invention.
[Fig. 6] Fig. 6 is a circuit block diagram showing an example of an existing circuit breaker.
[Fig. 7] Fig. 7 is a tripping characteristic diagram of the circuit breaker shown in Fig. 6.
[Fig. 8] Fig. 8 is a circuit block diagram showing another example of an existing circuit breaker.
[Fig. 9] Fig. 9 is a block diagram showing an undervoltage operation prohibiting circuit of the circuit breaker shown in Fig. 8.

### Description of Embodiments

Hereafter, using the drawings, a description will be given of embodiments of an electronic circuit breaker according to the invention. Identical reference signs in the drawings indicate identical or corresponding portions.

### First Embodiment

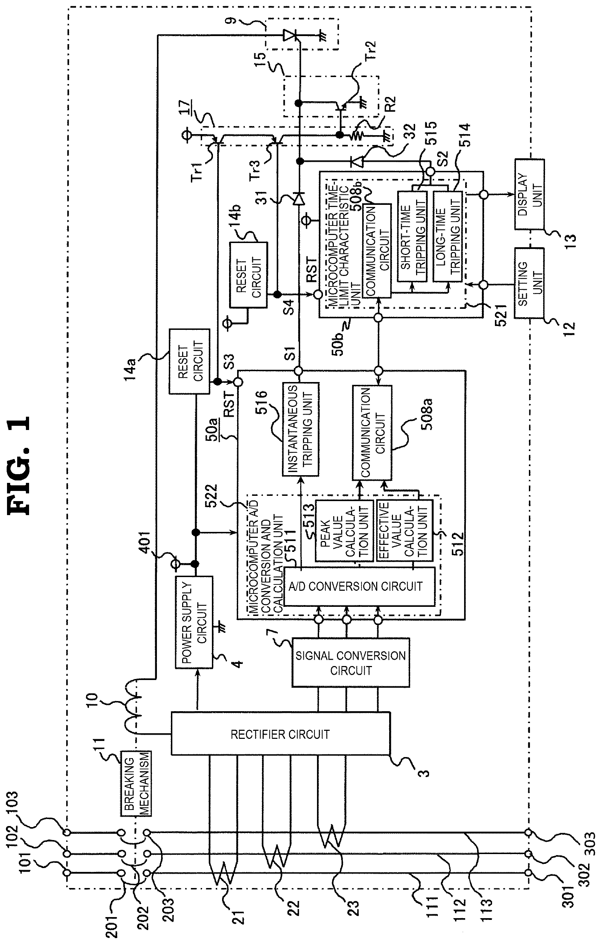

Fig. 1 is a block diagram of an electronic circuit breaker according to a first embodiment of the invention. In Fig. 1, load currents flowing in electric paths 111, 112, and 113 are detected by current transformers 21, 22, and 23, which are current detecting devices. Secondary output currents of the current transformers 21, 22, and 23 are input into a signal conversion circuit 7 via a rectifier circuit 3, and converted into voltage signals in accordance with current values. The voltage signals converted in the signal conversion circuit 7 are input into a first microcomputer 50a (hereafter referred to as the microcomputer 50a), and converted by an A/D conversion circuit 511 into digital values in accordance with magnitudes of the input voltage. An instantaneous tripping unit 516 carries out an operation in accordance with the digital values of voltage input from the A/D conversion circuit 511, that is, magnitudes of the secondary output currents of the current transformers 21, 22, and 23, and when an instantaneous tripping current region is exceeded, a tripping signal S1 is output at an H level to a switching circuit 9 connected via a backflow prevention diode 31.

Meanwhile, an effective value and a maximum value in a predetermined cycle of the digital values of input voltage converted by the A/D conversion circuit 511 are calculated by an effective value calculation unit 512 and a peak value calculation unit 513, and the digital values are transferred to a communication circuit 508a. The communication circuit 508a is connected to a communication circuit 508b of a second microcomputer 50b (hereafter referred to as the microcomputer 50b), receives the digital values of the calculated effective value and maximum value, and transfers the digital values to each of a long-time tripping unit 514 and a short-time tripping unit 515 of the microcomputer 50b. The long-time tripping unit 514 and the short-time tripping unit 515 carry out an operation in accordance with the transferred digital values, that is, the magnitudes of the secondary output currents of the current transformers 21, 22, and 23, carry out a time-limit operation in the event of an overcurrent, and subsequently output the tripping signal S1 at the H level to the switching circuit 9 connected via a backflow prevention diode 32.

The current transformers 21, 22, and 23 supply secondary output currents to a power supply circuit 4 via the rectifier circuit 3 in accordance with the load currents flowing in the electric paths 111, 112, and 113. The power supply circuit 4 generates a constant positive power supply 401, and supplies the power supply 401 to each of reset circuits 14a and 14b and the microcomputers 50a and 50b. The reset circuits 14a and 14b monitor a voltage value of the positive power supply 401 generated by the power supply circuit 4, and when the voltage value reaches a predetermined value (for example, 2.8V) or higher, the reset circuits 14a and 14b change reset signals S3 and S4 from an L level to an H level. The reset signal S3 is input into a transistor Tr1 of a pseudo load current circuit 17, the reset signal S4 is input into a transistor Tr3, and a collector current becomes zero owing to there no longer being a difference in potential between a base and an emitter. Because of this, a voltage being generated across a resistor R2 also becomes zero, and there is no longer a difference in potential between a base and an emitter of a transistor Tr2 connected to an input unit of the switching circuit 9.

That is, when the voltage value of the positive power supply 401 generated by the power supply circuit 4 is less than the predetermined value, current is caused to flow to the resistor R2 of the pseudo load current circuit 17, simultaneously with which the input unit of the switching circuit 9 is maintained at an L level by the transistor Tr2 of an AND circuit 15 connected to the switching circuit 9, and the switching circuit 9 is not driven even when the tripping signals S1 and S2 are erroneously output at the H level from the microcomputers 50a and 50b. When the positive power supply 401 is of the predetermined value or higher, current flowing in the resistor R2 of the pseudo load current circuit 17 stops, simultaneously with which the transistor Tr2 of the AND circuit 15 is turned off as a switching operation. Because of this, when the tripping signal S1 or S2 is output at the H level from one of the microcomputers 50a and 50b, the switching circuit 9 drives, a release type overcurrent tripping device 10 is excited, and switching contacts 201, 202, and 203 can be caused to open mechanically via a breaking mechanism 11.

When the switching contacts 201, 202, and 203 change from an opened state to a closed state, when a load instrument is turned on, or the like, the power supply circuit 4 takes on a transient state, and the positive power supply 401 gradually rises. At or below an operating voltage of the microcomputers 50a and 50b, the operation is unstable, and there is concern that the tripping signals S1 and S2 will be output at the H level, that is, that erroneous signals will be output. As previously mentioned, however, the reset circuits 14a and 14b monitor the voltage value of the positive power supply 401 of the power supply circuit 4, and when the output voltage is less than the predetermined value, the reset signal S3 is maintained at the L level, and the tripping signals S1 and S2 of the microcomputers 50a and 50b are deactivated, because of which the switching circuit 9 is not conductive, and no tripping operation is carried out. The reset signals S3 and S4 change to the H level at a point at which the positive power supply 401 of the power supply circuit 4 reaches the predetermined value, and the tripping signals S1 and S2 of the microcomputers 50a and 50b are activated.

The reset signals S3 and S4 are connected to RST terminals of the microcomputers 50a and 50b respectively, and even when a voltage equal to or greater than the operating voltage of the microcomputer is applied to the microcomputer 50a or 50b, the A/D conversion circuit 511, the effective value calculation unit 512, the peak value calculation unit 513, the instantaneous tripping unit 516, the short-time tripping unit 515, the long-time tripping unit 514, and the communication circuits 508a and 508b do not function provided that input into the RST terminal is at the L level. A calculation process is first started when the input into the RST terminal changes to the H level, and a tripping operation in accordance with the load currents flowing in the electric paths 111, 112, and 113 is carried out.

When the load currents flowing in the electric paths 111, 112, and 113 decrease, and the voltage value of the positive power supply 401 drops below the predetermined value, in a steady state of the power supply circuit 4, the reset signals S3 and S4 of the reset circuits 14a and 14b change from the H level to the L level, and the tripping signals S1 and S2 of the microcomputers 50a and 50b are deactivated by the AND circuit 15. By an L level reset signal being input into the RST terminals of the microcomputers 50a and 50b at the same time, the calculation process of each of microcomputers 50a and 50b is stopped, and the microcomputers 50a and 50b are maintained in a reset state. Subsequently, when the load currents flowing in the electric paths 111, 112, and 113 increase, the voltage value of the positive power supply 401 rises, and when the voltage value exceeds the predetermined value, the reset signals S3 and S4 of the reset circuits 14a and 14b change from the L level to the H level, the tripping signals S1 and S2 of the microcomputers 50a and 50b are activated, and an H level reset signal is input into the RST terminals of the microcomputers 50a and 50b, whereby the reset state of the microcomputers 50a and 50b is ended, and the calculation process is restarted.

In this way, the microcomputers 50a and 50b start the calculation process only when the power supply voltage is normal, and the tripping signals S1 and S2 thereof are activated.

According to the electronic circuit breaker according to the first embodiment, as heretofore described, the microcomputer 50a manages an A/D conversion and calculation unit 522, and the microcomputer 50b manages a time-limit characteristic unit 521, whereby a process needed for each calculation is lightened, a reduction in processing time and a reduction in a used amount of capacity of each incorporated memory can be achieved, and an A/D conversion and calculation unit common to each product can be divided. Note that a necessity to transmit a digital signal processed using the A/D conversion and calculation unit 522 to the time-limit characteristic unit 521 via the communication circuit 508a arises, because of which, of the time-limit characteristic unit 521, only instantaneous tripping characteristics for which a short operation is needed and a tripping signal output circuit when the instantaneous tripping current region is exceeded are left in the microcomputer 50a, in the A/D conversion and calculation unit 522 including the A/D conversion circuit 511, and when the problem of the short operation is resolved, the microcomputer 50b is given a role of short time-limit characteristics, long time-limit characteristics, setting, display control, and the like.

Also, by the reset circuits 14a and 14b being connected to the microcomputers 50a and 50b respectively, and an undervoltage operation prohibiting circuit being configured of the AND circuit 15 and the pseudo load current circuit 17, an output of an erroneous tripping signal from each of the microcomputers 50a and 50b when a power supply state is unstable can be prevented by the undervoltage operation prohibiting circuit.

### Second Embodiment

Next, an electronic circuit breaker according to a second embodiment of the invention will be described.

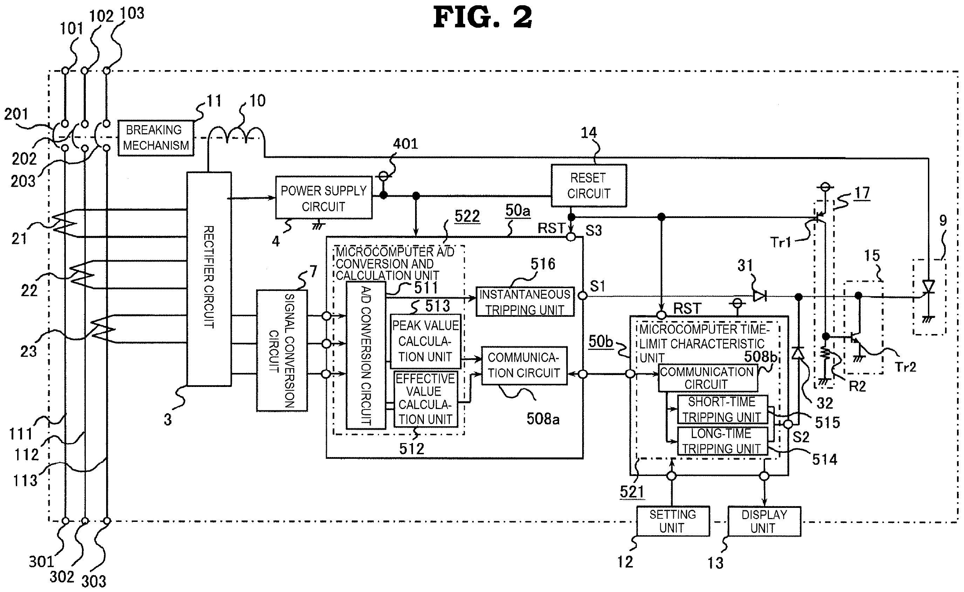

Fig. 2 is a block diagram of the electronic circuit breaker according to the second embodiment. As shown in Fig. 2, differences between the first embodiment and the second embodiment are that there is a single reset circuit 14 only, and the reset signal S3 is connected to both of the microcomputers 50a and 50b and the transistor Tr1 of the pseudo load current circuit 17. As other configurations are the same as in the first embodiment, a redundant description will be omitted by allotting identical reference signs.

When an existing undervoltage operation prohibiting circuit is applied in a circuit breaker such that a multiple of microcomputers are mounted and each microcomputer has a tripping signal output circuit, as in the first embodiment, there are also a multiple of reset circuits, and variation exists in reset circuit drive voltages. Because of this, the undervoltage operation prohibiting circuit does not function until the reset circuit drive voltage or higher is reached in all reset circuits, and a power supply voltage region in which an output of an erroneous tripping signal from each microcomputer cannot be prevented exists. Also, variation exists in the same way in release voltages of the reset circuits, because of which a pseudo load current stops even though not all the microcomputer reset states have been ended, and the power supply circuit falls into an unstable state.

According to the electronic circuit breaker according to the second embodiment, there is the single reset circuit 14 only, because of which no variation in reset circuit drive voltage or release voltage exists, the power supply voltage is always monitored using a constant voltage threshold, and an output of an erroneous tripping signal from each of the microcomputers 50a and 50b when the power supply state is unstable can be prevented using an undervoltage operation prohibiting circuit.

Also, owing to there being the single reset circuit 14 only, the number of parts of the undervoltage operation prohibiting circuit formed of the reset circuit 14, the AND circuit 15, and the pseudo load current circuit 17 can be reduced, and a mounting area can be configured to be small and of low cost.

### Third Embodiment

Next, an electronic circuit breaker according to a third embodiment of the invention will be described.

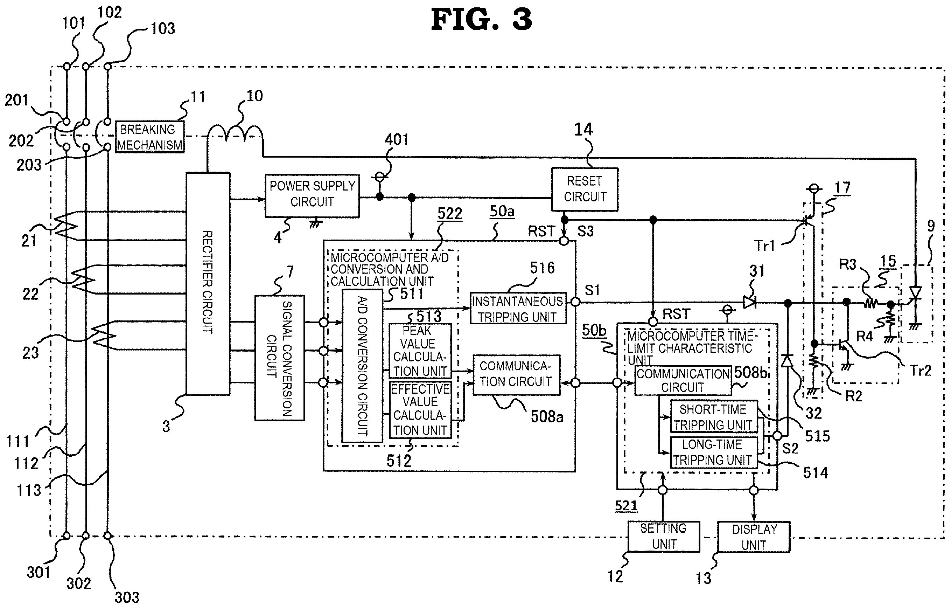

Fig. 3 is a block diagram of the electronic circuit breaker according to the third embodiment. As shown in Fig. 3, a voltage dividing circuit wherein a resistor R3 is connected in series between the transistor Tr2 of the AND circuit 15 and the input unit of the switching circuit 9, and a resistor R4 is connected in parallel with a ground, is provided in the electronic circuit breaker according to the third embodiment. As other configurations are the same as in the second embodiment, a redundant description will be omitted by allotting identical reference signs.

The reset circuit 14 monitors the voltage value of the positive power supply 401 of the power supply circuit 4, and drives in accordance with the positive power supply voltage. Because of this, when the load currents flowing in the electric paths 111, 112, and 113 are small (for example, 10% of the rated current), and the voltage value of the positive power supply 401 generated by the power supply circuit 4 is small (for example, 0.7 V), the reset circuit 14 does not drive, and a region in which the reset signal S3 is at the H level, that is, of the same potential as the positive power supply 401, exists.

When erroneous tripping signals S1 and S2 are output from the microcomputer 50a and 50b in this region, the switching circuit 9 is driven, and the circuit breaker malfunctions. By providing the voltage dividing circuit formed of the resistors R3 and R4, resistance values of the resistors R3 and R4 are regulated so that the voltage values of erroneous tripping signals S1 and S2 in this kind of voltage region are reduced, and fall to or below a drive voltage of the switching circuit 9, whereby malfunction can be prevented, and a further increase in operational reliability of the circuit breaker is achieved. Of course, it goes without saying that when the tripping signals S1 and S2 are output at the H level in a steady state, the resistance values of the resistors R3 and R4 need to be regulated so that the voltage values are equal to or higher than the drive voltage of the switching circuit 9.

### Fourth Embodiment

Next, an electronic circuit breaker according to a fourth embodiment of the invention will be described.

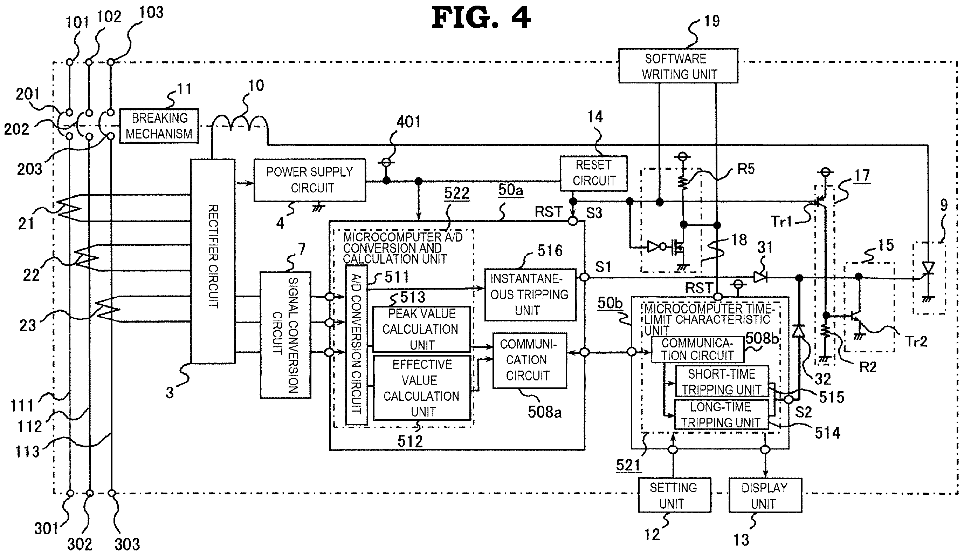

Fig. 4 is a block diagram of the electronic circuit breaker according to the fourth embodiment. As shown in Fig. 4, differences between the second embodiment and the fourth embodiment are that a buffer circuit 18 and a software writing unit 19 are newly provided. The buffer circuit 18 is inserted between the reset circuit 14 and the RST terminal of the microcomputer 50b, and the software writing unit 19 is connected to the RST terminal of each of the microcomputers 50a and 50b. As other configurations are the same as in the second embodiment, a redundant description will be omitted by allotting identical reference signs.

The reset signal S3 from the reset circuit 14 is input into the buffer circuit 18, and when the reset signal S3 is at the H level, an output of the buffer circuit 18 is of a high impedance, and the H level signal is input into the RST terminal of the microcomputer 50b via a resistor R5. When the reset signal S3 is at the L level, the output of the buffer circuit 18 is also at an L level, and is input into the RST terminal of the microcomputer 50b. Nothing changes logically, but the buffer circuit 18 has a function of not allowing inputs of the RST terminal of the microcomputer 50a or the pseudo load current circuit 17 to be affected, even when a potential of the RST terminal of the microcomputer 50b changes.

Generally, a microcomputer RST terminal is used as a debugging terminal for writing software, and when software of one microcomputer is written from the software writing unit 19 in a state wherein a circuit is configured, that is, a state wherein the RST terminals of the microcomputers 50a and 50b are shared, the RST terminals repeatedly switch between an H level and an L level in accordance with an exchange of data, and the other microcomputer repeatedly switches between resetting and starting. Herein, when a specification is such that the RST terminal is set as a generic output terminal when a reset of the other microcomputer is ended, a problem is envisaged in that a data exchange waveform for software writing is impeded, and writing cannot be carried out.

Therefore, by providing the buffer circuit 18 between the RST terminals of the microcomputers 50a and 50b, a configuration is such that even assuming that an exchange of software writing data in one microcomputer (for example, 50a) causes a switch between resetting and starting to be repeated in the other microcomputer (for example, 50b), the output of the RST terminal of the microcomputer 50b does not affect the RST terminal of the microcomputer 50a, even in a state wherein a circuit is configured.

### Fifth Embodiment

Next, an electronic circuit breaker according to a fifth embodiment of the invention will be described.

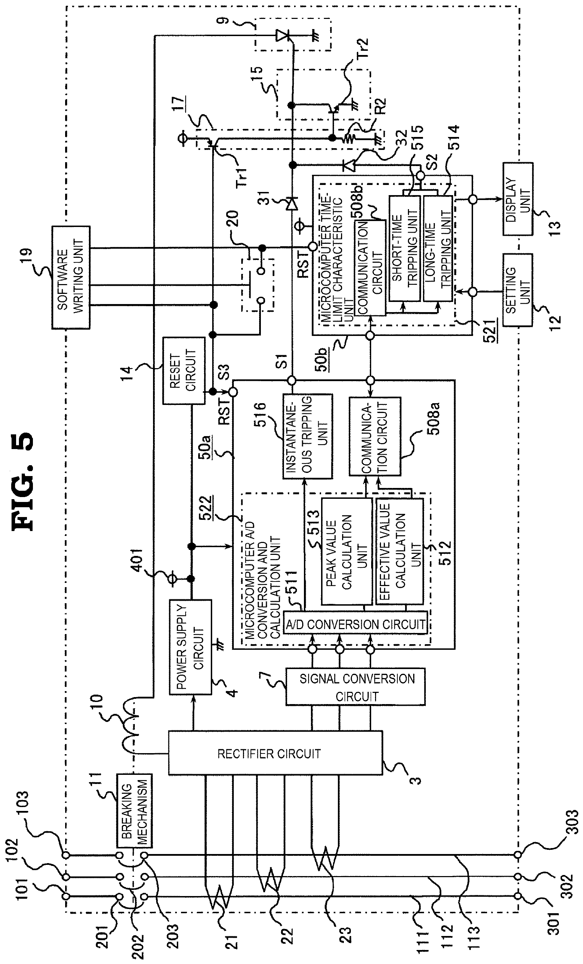

Fig. 5 is a block diagram of the electronic circuit breaker according to the fifth embodiment. The buffer circuit 18 in Fig. 4 may be of a configuration such that a kind of switching circuit 20 shown in Fig. 5 connected to the software writing unit 19 is provided, control is carried out so that software can be written normally with the switching circuit 20 opened when the software writing unit 19 is driving, and the switching circuit 20 is closed when software cannot be written. As other configurations are the same as in the fourth embodiment, a redundant description will be omitted by allotting identical reference signs.

In the same way as in the fourth embodiment, the electronic circuit breaker according to the fifth embodiment is also such that even assuming that an exchange of software writing data in one microcomputer (for example, 50a) causes a switch between resetting and starting to be repeated in the other microcomputer (for example, 50b), the output of the RST terminal of the microcomputer 50b does not affect the RST terminal of the microcomputer 50a, even in a state wherein a circuit is configured.

Heretofore, a first embodiment to a fifth embodiment of the invention have been described, but the embodiments can be freely combined, and each embodiment can be modified or abbreviated as appropriate, without departing from the scope of the invention. The scope of protection of the present invention is defined by the appended claims.

## Claims

1. An electronic circuit breaker, comprising:
a switching contact (201, 202, 203) that is configured to open and close an electric path (111, 112, 113);
a current detecting device (21, 22, 23) that is configured to detect a current in the electric path (111, 112, 113);
a characteristic setting unit (12) that is configured to set an instantaneous tripping characteristic and a time-limit tripping characteristic for opening the switching contact (201, 202, 203) in accordance with a current flowing through the electric path (111, 112, 113); **characterized in that** a first microcomputer (50a) into which an output signal of the current detecting device (21, 22, 23) is input, and which is configured to output an instantaneous tripping signal (S1);
a second microcomputer (50b) to which the characteristic setting unit (12) is connected, and which is configured to transmit the instantaneous tripping characteristic to the first microcomputer (50a), acquire information on a current flowing through the electric path (111, 112, 113) from the first microcomputer (50a), and output a time-limit tripping signal (S2); and
a tripping device (10) that is configured to open the switching contact (201, 202, 203) based on the instantaneous tripping signal (S1) and the time-limit tripping signal (S2).

2. The electronic circuit breaker according to claim 1, wherein
the current detecting device (21, 22, 23) is configured of a current transformer, the electronic circuit breaker comprising:
a rectifier circuit (3), connected to a secondary side of the current transformer, that is configured to convert a secondary output current in accordance with a current flowing in the electric path (111, 112, 113) in a single direction;
a power supply circuit (4), connected to an output terminal of the rectifier circuit (3), that is configured to output a constant positive side voltage;
a single reset circuit (14) that is configured to simultaneously carry out reset control of the first microcomputer (50a) and the second microcomputer (50b) when the power supply circuit (4) does not reach a predetermined voltage; and
an undervoltage operation prohibiting circuit, wherein a pseudo load current circuit (17) and an AND circuit (15) connected to an output side of the reset circuit (14) are combined, that is configured to deactivate the tripping signals (S1, S2) output from the first microcomputer (50a) and the second microcomputer (50b) when a power supply of the power supply circuit (4) rises, or when the power supply is unstable.

3. The electronic circuit breaker according to claim 2, comprising a voltage dividing circuit configured of a first resistor (R3) inserted between an input terminal of a switching circuit (9) that is configured to drive the tripping device (10) and tripping signal output terminals of the first microcomputer (50a) and the second microcomputer (50b) and a second resistor (R4) connected to a ground from the first resistor R3), wherein an erroneous tripping signal (S1, S2) output from the first microcomputer (50a) and the second microcomputer (50b) in a region in which voltage of the power supply circuit (4) is low, and the undervoltage operation prohibiting circuit does not function, is controlled to a voltage such that the switching circuit (9) does not drive.

4. The electronic circuit breaker according to claim 2 or 3, comprising:
a buffer circuit (18) provided between the single reset circuit (14) and a reset terminal (RST) of the second microcomputer (50b); and
a software writing unit (19) connected to the reset terminals (RST) of the first microcomputer (50a) and the second microcomputer (50b), wherein, when software writing is carried out using the reset terminal of either one of the first microcomputer (50a) and the second microcomputer (50b), the buffer circuit (18) is configured to enable software to be written without affecting an input of the reset terminal (RST) of the other microcomputer.

5. The electronic circuit breaker according to claim 2 or 3, comprising:
a switching circuit (20) provided between the single reset circuit (14) and a reset terminal (RST) of the second microcomputer (50b); and
a software writing unit (19) connected to the reset terminals (RST) of the first microcomputer (50a) and the second microcomputer (50b), wherein,
when software writing is carried out using the reset terminal of either one of the first microcomputer (50a) and the second microcomputer (50b), the switching circuit (20) is configured to enable software to be written without affecting the reset terminal (RST) of the other microcomputer.

6. The electronic circuit breaker according to any one of claims 1 to 5, wherein the first microcomputer (50a) includes an instantaneous tripping unit (516) that outputs the instantaneous tripping signal, and the second microcomputer (50b) includes a short-time tripping unit (515) and a long-time tripping unit (514) that are configured to output the time-limit tripping signal (S2).

## Patentansprüche

1. Elektronischer Schutzschalter, umfassend:
einen Schaltkontakt (201, 202, 203), der zum Öffnen und Schließen eines elektrischen Pfades (111, 112, 113) konfiguriert ist;
eine Stromerfassungsvorrichtung (21, 22, 23), die dazu konfiguriert ist, einen Strom in dem elektrischen Pfad (111, 112, 113) zu erfassen;
eine Kennlinieneinstelleinheit (12), die dazu konfiguriert ist, eine momentane Auslösekennlinie und eine zeitlich begrenzte Auslösekennlinie zum Öffnen des Schaltkontakts (201, 202, 203) in Übereinstimmung mit einem durch den elektrischen Pfad (111, 112, 113) fließenden Strom einzustellen;
**gekennzeichnet durch**
einen ersten Mikrocomputer (50a), in den ein Ausgangssignal der Stromerfassungsvorrichtung (21, 22, 23) eingegeben ist und der dazu konfiguriert ist, ein momentanes Auslösesignal (S1) auszugeben;
einen zweiten Mikrocomputer (50b), mit dem die Kennlinieneinstelleinheit (12) verbunden ist und der dazu konfiguriert ist, die momentane Auslösekennlinie an den ersten Mikrocomputer (50a) zu übertragen, Informationen über einen Strom, der durch den elektrischen Pfad (111, 112, 113) fließt, aus dem ersten Mikrocomputer (50a) zu erhalten und ein zeitlich begrenztes Auslösesignal (S2) auszugeben; und
eine Auslösevorrichtung (10), die dazu konfiguriert ist, den Schaltkontakt (201, 202, 203) auf der Grundlage des momentanen Auslösesignals (S1) und des zeitlich begrenzten Auslösesignals (S2) zu öffnen.

2. Elektronischer Schutzschalter nach Anspruch 1,
wobei die Stromerfassungsvorrichtung (21, 22, 23) aus einem Transformator konfiguriert ist,
wobei der elektronische Schutzschalter umfasst:
eine Gleichrichterschaltung (3), die mit einer Sekundärseite des Transformators verbunden ist, die dazu konfiguriert ist, einen sekundären Ausgangsstrom in Übereinstimmung mit einem Strom umzuwandeln, der in dem elektrischen Pfad (111, 112, 113) in einer einzigen Richtung fließt;
eine Stromversorgungsschaltung (4), die mit einem Ausgangsanschluss der Gleichrichterschaltung (3) verbunden ist und dazu konfiguriert ist, eine konstante positive Seitenspannung auszugeben;
eine einzelne Rücksetzschaltung (14), die dazu konfiguriert ist, gleichzeitig eine Rücksetzsteuerung des ersten Mikrocomputers (50a) und des zweiten Mikrocomputers (50b) durchzuführen, wenn die Stromversorgungsschaltung (4) eine vorbestimmte Spannung nicht erreicht; und
eine Unterspannungsbetriebsverhinderungsschaltung,
wobei eine Pseudolaststromschaltung (17) und eine UND-Schaltung (15), die mit einer Ausgangsseite der Rücksetzschaltung (14) verbunden ist, kombiniert sind, die dazu konfiguriert ist, die Auslösesignale (S1, S2), die von dem ersten Mikrocomputer (50a) und dem zweiten Mikrocomputer (50b) ausgegeben sind, zu deaktivieren, wenn eine Stromversorgung der Stromversorgungsschaltung (4) ansteigt oder wenn die Stromversorgung instabil ist.

3. Elektronischer Schutzschalter nach Anspruch 2, umfassend:
eine Spannungsteilerschaltung, die aus einem ersten Widerstand (R3), der zwischen einem Eingangsanschluss einer Schaltschaltung (9), die dazu konfiguriert ist, die Auslösevorrichtung (10) zu betreiben, und Auslösesignalausgangsanschlüssen des ersten Mikrocomputers (50a) und des zweiten Mikrocomputers (50b) eingefügt ist, und einem zweiten Widerstand (R4), der von dem ersten Widerstand (R3) aus mit Masse verbunden ist, konfiguriert ist,
wobei ein fehlerhaftes Auslösesignal (S1, S2), das von dem ersten Mikrocomputer (50a) und dem zweiten Mikrocomputer (50b) in einem Bereich ausgegeben ist, in dem die Spannung der Stromversorgungsschaltung (4) niedrig ist und die Unterspannungsbetriebsverhinderungsschaltung nicht funktioniert, auf eine solche Spannung gesteuert wird, dass die Schaltschaltung (9) nicht betreibt.

4. Elektronischer Schutzschalter nach Anspruch 2 oder 3, umfassend:
eine Pufferschaltung (18), die zwischen der einzelnen Rücksetzschaltung (14) und einem Rücksetzanschluss (RST) des zweiten Mikrocomputers (50b) vorgesehen ist; und
eine Software-Schreibeinheit (19), die mit den Rücksetzanschlüssen (RST) des ersten Mikrocomputers (50a) und des zweiten Mikrocomputers (50b) verbunden ist,
wobei, wenn das Schreiben von Software unter Verwendung des Rücksetzanschlusses entweder des ersten Mikrocomputers (50a) oder des zweiten Mikrocomputers (50b) ausgeführt wird, die Pufferschaltung (18) dazu konfiguriert ist, das Schreiben von Software zu ermöglichen, ohne einen Eingang des Rücksetzanschlusses (RST) des anderen Mikrocomputers zu beeinflussen.

5. Elektronischer Schutzschalter nach Anspruch 2 oder 3, umfassend:
eine Schaltschaltung (20), die zwischen der einzelnen Rücksetzschaltung (14) und einem Rücksetzanschluss (RST) des zweiten Mikrocomputers (50b) vorgesehen ist; und
eine Software-Schreibeinheit (19), die mit den Rücksetzanschlüssen (RST) des ersten Mikrocomputers (50a) und des zweiten Mikrocomputers (50b) verbunden ist,
wobei, wenn das Schreiben von Software unter Verwendung des Rücksetzanschlusses entweder des ersten Mikrocomputers (50a) oder des zweiten Mikrocomputers (50b) ausgeführt wird, die Schaltschaltung (20) dazu konfiguriert ist, das Schreiben von Software zu ermöglichen, ohne den Rücksetzanschluss (RST) des anderen Mikrocomputers zu beeinflussen.

6. Elektronischer Schutzschalter nach einem der Ansprüche 1 bis 5,
wobei der erste Mikrocomputer (50a) eine momentane Auslöseeinheit (516) umfasst, die das momentane Auslösesignal ausgibt, und
wobei der zweite Mikrocomputer (50b) eine kurzzeitige Auslöseeinheit (515) und eine langzeitige Auslöseeinheit (514) umfasst, die dazu konfiguriert sind, das zeitlich begrenzte Auslösesignal (S2) auszugeben.

## Revendications

1. Disjoncteur électronique, comprenant :
un contact de commutation (201, 202, 203) qui est configuré pour ouvrir et fermer un trajet électrique (111, 112, 113) ;
un dispositif de détection de courant (21, 22, 23) qui est configuré pour détecter un courant dans le trajet électrique (111, 112, 113) ;
une unité de réglage de caractéristique (12) qui est configurée pour régler une caractéristique de déclenchement instantané et une caractéristique de déclenchement de limite temporelle pour l'ouverture du contact de commutation (201, 202, 203) conformément à un courant circulant à travers le trajet électrique (111, 112, 113) ; **caractérisé par**
un premier micro-ordinateur (50a) dans lequel un signal de sortie du dispositif de détection de courant (21, 22, 23) est entré, et qui est configuré pour délivrer en sortie un signal de déclenchement instantané (S1) ;
un second micro-ordinateur (50b) auquel l'unité de réglage de caractéristique (12) est connectée, et qui est configuré pour transmettre la caractéristique de déclenchement instantané au premier micro-ordinateur (50a), acquérir des informations concernant un courant circulant à travers le trajet électrique (111, 112, 113) depuis le premier micro-ordinateur (50a), et délivrer en sortie un signal de déclenchement de limite temporelle (S2) ; et un dispositif de déclenchement (10) qui est configuré pour ouvrir le contact de commutation (201, 202, 203) en fonction du signal de déclenchement instantané (S1) et du signal de déclenchement de limite temporelle (S2).

2. Disjoncteur électronique selon la revendication 1, dans lequel le dispositif de détection de courant (21, 22, 23) est constitué d'un transformateur de courant, le disjoncteur électronique comprenant :
un circuit redresseur (3), connecté à un côté secondaire du transformateur de courant, lequel est configuré pour convertir un courant de sortie secondaire conformément à un courant circulant dans le trajet électrique (111, 112, 113) dans une direction unique ;
un circuit d'alimentation en puissance (4), connecté à une borne de sortie du circuit redresseur (3), lequel est configuré pour délivrer en sortie une tension constante côté positif ;
un unique circuit de réinitialisation (14) qui est configuré pour effectuer simultanément une commande de réinitialisation du premier micro-ordinateur (50a) et du second micro-ordinateur (50b) lorsque le circuit d'alimentation en puissance (4) n'atteint pas une tension prédéterminée ; et un circuit d'interdiction de fonctionnement en sous-tension, dans lequel un circuit de pseudo-courant de charge (17) et un circuit ET (15) connectés à un côté de sortie du circuit de réinitialisation (14) sont combinés, lequel est configuré pour désactiver les signaux de déclenchement (S1, S2) délivrés en sortie par le premier micro-ordinateur (50a) et le second micro-ordinateur (50b) lorsqu'une alimentation en puissance du circuit d'alimentation en puissance (4) augmente, ou lorsque l'alimentation en puissance est instable.

3. Disjoncteur électronique selon la revendication 2, comprenant un circuit diviseur de tension constitué d'une première résistance (R3) insérée entre une borne d'entrée d'un circuit de commutation (9) qui est configuré pour piloter le dispositif de déclenchement (10) et des bornes de sortie de signal de déclenchement du premier micro-ordinateur (50a) et du second micro-ordinateur (50b) et d'une seconde résistance (R4) connectée à une masse de la première résistance R3), dans lequel un signal de déclenchement erroné (S1, S2) délivré en sortie par le premier micro-ordinateur (50a) et le second micro-ordinateur (50b) dans une région dans laquelle une tension du circuit d'alimentation en puissance (4) est basse, et où le circuit d'interdiction de fonctionnement en sous-tension ne fonctionne pas, est commandé à une tension telle que le circuit de commutation (9) ne pilote pas.

4. Disjoncteur électronique selon la revendication 2 ou 3, comprenant :
un circuit tampon (18) fourni entre l'unique circuit de réinitialisation (14) et
une borne de réinitialisation (RST) du second micro-ordinateur (50b) ; et
une unité d'écriture de logiciel (19) connectée aux bornes de réinitialisation (RST) du premier micro-ordinateur (50a) et du second micro-ordinateur (50b), dans lequel, lorsqu'une écriture de logiciel est effectuée à l'aide de la borne de réinitialisation de l'un ou l'autre parmi le premier micro-ordinateur (50a) et le second micro-ordinateur (50b), le circuit tampon (18) est configuré pour permettre une écriture de logiciel sans influencer une entrée de la borne de réinitialisation (RST) de l'autre micro-ordinateur.

5. Disjoncteur électronique selon la revendication 2 ou 3, comprenant :
un circuit de commutation (20) fourni entre l'unique circuit de réinitialisation (14) et une borne de réinitialisation (RST) du second micro-ordinateur (50b) ; et
une unité d'écriture de logiciel (19) connectée aux bornes de réinitialisation (RST) du premier micro-ordinateur (50a) et du second micro-ordinateur (50b), dans lequel, lorsqu'une écriture de logiciel est effectuée à l'aide de la borne de réinitialisation de l'un ou l'autre parmi le premier micro-ordinateur (50a) et le second micro-ordinateur (50b), le circuit de commutation (20) est configuré pour permettre une écriture de logiciel sans influencer la borne de réinitialisation (RST) de l'autre micro-ordinateur.

6. Disjoncteur électronique selon l'une quelconque des revendications 1 à 5, dans lequel le premier micro-ordinateur (50a) comporte une unité de déclenchement instantané (516) qui délivre en sortie le signal de déclenchement instantané, et le second micro-ordinateur (50b) comporte une unité de déclenchement de courte durée (515) et une unité de déclenchement de longue durée (514) qui sont configurées pour délivrer en sortie le signal de déclenchement de limite temporelle (S2).
